# EUROPEAN PATENT APPLICATION

(11) **EP 1 892 662 A1**
(43) Date of publication of application: **27.02.2008**
(21) Application number: 07105309.4
(22) Date of filing: 30.03.2007
(51) Int. Cl.: G06Q 30/00

(54) **A method for delivery of printed materials (hard copy) sent via e-mail by the sender to the relevant branch of the delivery services office closest to the recipient's address**

(30) Priority: 02.08.2006 IL 17722206
(71) Applicant: Shabtau, Amnon, Tel Aviv (IL); Sharabi, Shmuel, Tel Aviv (IL)
(72) Inventor: Shabtau, Amnon, Tel Aviv (IL); Sharabi, Shmuel, Tel Aviv (IL)
(74) Representative: Modiano, Micaela Nadia

(57) **Abstract**

Many people use delivery services to send printed material. The printed material is collected by a courier from the sender's address and is transferred (by motorbikes, cars, and airplanes - according to need) to the recipient's address. When the sender's and recipient's addresses are far apart (for instance in different cities and certainly in different countries), the cost of delivery is relatively high and the time, from the collection of the material until its delivery to the recipient, is relatively long. The present invention is a delivery service, whereby the transport of the printed material from the sender to the relevant branch of the delivery services office closest to the recipient's address is performed by sending the printed material as a digital file from the customer's (the sender's) computer to the computer of the relevant branch (closest to the recipient's address). The file is then printed at the said branch as printed material, packaged, and delivered to the recipient's address. This avoids the need to (physically) transport the printed material by motorbikes, cars, and airplanes (according to need) from the sender's address to the relevant branch closest to the recipient's address. The present invention is an innovative delivery service that significantly lowers delivery costs and reduces delivery time to the recipient. People also often send regular mail from one country to another. It often takes several days from the time the letter was sent to the time it is received. The sender can e-mail the letter to the relevant branch of the delivery services office, where it is printed and sent by regular local post to the recipient. This service saves a great deal of time in sending mail. The service is provided through a website.

## Description

### TECHNICAL FIELD

The present invention is a method for providing an innovative delivery and mailing service that significantly reduces delivery costs as well as delivery time to the recipient. The service is provided through a website. The customer (the person who wishes to send the printed material) enters the delivery service website, inputs his or her personal details, as well as those of the recipient, and attaches the printed matter as an e-mail file that is sent directly to the relevant branch of the delivery service. The printed material is printed on an appropriate printer. A courier collects the printed material from the relevant branch and delivers it to the recipient's address. The service can, naturally, include sending the printed material via the regular local mail from the branch to the recipient's address.

### BACKGROUND ART

Many companies and businesses use delivery services, as well as regular mail to send printed materials [as well as compact disks and/or diskettes and/or other technological means that hold information such as audio samples (mainly music) or video clips and so on].

Many businesses exist today that provide courier services for shipping, dispatching, and delivering of letters, pictures, photographs, legal documents and all kinds of other documents and printed materials, as well as digital files such as music or video files that are saved on compact discs or any other possible technological means. For convenience purposes, these materials are defined in this application as "printed material", although it is emphasized that this term also includes digital files and files that contain music, audio, sounds, photographs, pictures and video that can be stored on a compact disc or by any other means.

Delivery service of printed material usually comprises of collecting the printed material from the sender's address by a courier, transporting the printed material to the recipient's address, delivering it to the recipient, and also often having the recipient sign a delivery confirmation and returning the signed delivery confirmation to the sender. In other cases, delivery of the material is done via regular post.

If the sender and the recipient are located in the same geographical area or close by, the delivery service does not involve particularly high costs and it is done relatively quickly. But when the sender's and recipient's addresses are distant from one another, for instance in different cities and certainly in different countries, the cost is higher due to the need to physically transport the printed material by acceptable modes of transportation (such as motorbikes, cars, and airplanes) from the sender's address to the recipient's address, and the time, from the collection of the material from the sender's address until its delivery to the recipient is relatively long. Even when sending printed material by regular mail, especially from one country to another country, it takes several days.

Thusfar, we have described existing knowledge.

The service that is the subject of this invention is a delivery service but one whereby the transport of the printed material from the sender's address to that of a representative and/or branch of the delivery services office that is relatively close to the recipient's address is executed by sending the printed material as a digital file (or a file that is stored in any other technological method that enables its transfer by e-mail over the internet). Such file is sent from the sender's address to the delivery services office and then on to the destination branch of the delivery services office, or directly to the destination branch of the delivery services office, where it is printing out as printed material, packed in an envelope as is acceptable, and delivered to the recipient's address. Delivery can be either personal delivery (by courier) or by regular local post.

### THE INVENTION

This present invention is an innovative delivery service, as well as a mail sending service, that significantly lowers delivery costs and reduces delivery time of the material to the recipient. The service is provided through an internet site owned by the delivery services office implementing the invention (referred to in this application as "the delivery services office").

The provision of the service, subject of the invention:
(a) The customer (the person interested in sending the printed material) enters the website of the delivery services office (b) The customer inputs his or her details into the designated fields (c) The customer inputs the recipient's details into the designated fields (c) The customer attaches the printed material as an e-mail file (e.g. the customer can attach as printed material a file located on his computer or printed material scanned earlier as a computer file) (d) The customer sends these details together with the printed material file to the e-mail of the delivery services office (e) The delivery services office sends the details and the file of printed material to the branch closest to the recipient's address - the software of the service's website can be programmed so that the printed material is sent directly to the relevant branch according to the recipient's address (e.g. according to the zip code or city name and/or destination country). (f) The printed material is printed using a suitable printer or other printing equipment, or is transferred, using a burner or backup device (if the file is, for instance, a Word file, or picture, or video file, or music, etc.) onto a compact disc or any other backup method (g) The printed material can be put into an envelope bearing the sender's and recipient's details. (h) A courier collects the printed material from the relevant branch and delivers it by personal delivery to the recipient's address. The printed material can be sent by regular local post to the recipient's address, in accordance with the per customer's requirements. (i) In case of personal delivery, the courier can ask the recipient to sign a delivery confirmation slip, which can then be scanned into a computer file and sent by e-mail to the sender- in accordance with the customer's requirements (and in special cases the delivery confirmation can also be sent by regular post).

The service can also include one or more of the following auxiliary services:

Direct data entry into a designated field on the website of the delivery services office. Such an input document, in which the customer can type text and/or numbers and/or attach pictures and so on, will constitute the printed material that will be printed as described above at the branch of the delivery services office and delivered as described above to the recipient.

Option of adding the sender's electronic signature to the documents included in the printed material or to some of them (for instance, if the customer directly inputs text or numbers or attaches files to the designated website field, or on a document and/or letter that exists as a file on the customer's computer and he or she wishes the documents to bear his or her signature and/or the sender's electronic signature).

The invention has many advantages, which include, among others:

The need to transport the printed material from the sender's address to the branch or location closest to the recipient's address is avoided. This leads to savings both in the cost of the transport and in the time required for such transport.

The invention renders it unnecessary to coordinate the collection of the printed material from the sender's address. The courier collecting the material is currently restricted to the sender's activity hours. According to the invention, the courier can send the printed material by e-mail to the delivery services office unrestrictedly, at any time of the day or night.

For instance, personal delivery of court documents that must be presented as written material to the defendant (the recipient). Instead of the courier collecting the printed material from the sender's address and transporting it to the recipient's address and transporting back the signed delivery confirmation, the sender can scan the court documents, send them by e-mail to the relevant branch where they are printed and delivered to the recipient; The delivery confirmation is then also scanned and sent by return e-mail to the sender.

The existence of the innovative service, which is the subject of this invention, can increase the delivery of printed material by personal delivery. For instance, municipalities can send requests for payment of parking tickets by personal delivery since the cost of the delivery will be significantly reduced. This, in turn, will prevent futile hearing on whether or not the printed material sent by regular post was indeed received by the recipient. The service can serve as a substitute for the delivery of printed material by regular post between countries, with the objective of saving time. The printed material arrives by e-mail at the branch closest to the recipient's address and is sent from there by regular local post.

## Claims

1. A method for providing delivery services through a website such that the sender e-mails the printed material as a digital file to the delivery services office where it is printed and collected by a courier person who delivers it to the recipient.

2. A method of providing mail sending services through a website such that the sender e-mails the printed material as a digital file to the delivery services office where it is printed and sent by regular local post to the recipient's address.

3. A method as stated in Claim 1 and/or 2 where, in addition, the delivery services office, creates a network of franchises and branches in many locations so that the printed material is emailed directly to the relevant branch.
